# EUROPEAN PATENT SPECIFICATION

(11) **EP 1 142 169 B1**
(45) Date of publication and mention of the grant of the patent: **18.12.2002**
(21) Application number: 00900247.8
(22) Date of filing: 11.01.2000
(51) Int. Cl.: H04B 10/26

(54) **RADIO FREQUENCY RECEIVER CIRCUIT**
FUNKFREQUENZEMPFÄNGERSCHALTUNG
CIRCUIT RECEPTEUR HAUTE FREQUENCE

(30) Priority: 16.01.1999 GB 9900901
(43) Date of publication of application: 10.10.2001
(73) Proprietor: Marconi Optical Components Limited, London WIX 8AQ (GB)
(72) Inventor: FORSTER, Ian James, Chelmsford, Essex CM1 6LA (GB)
(74) Representative: McGowan, Nigel George
(86) International application number: GB0000044
(87) International publication number: WO00042721

(56) References cited:
- US-A- 4 941 205
- US-A- 5 307 195
- PATENT ABSTRACTS OF JAPAN vol. 012, no. 290 (P-742), 9 August 1988 (1988-08-09) & JP 63 065587 A (MATSUSHITA ELECTRIC IND CO LTD), 24 March 1988 (1988-03-24)
- ROSENTHAL D A: "RETROREFLECTING PASSIVE DATA TRANSMITTER" NAVY TECHNICAL DISCLOSURE BULLETIN,US,OFFICE OF NAVAL RESEARCH. ARLINGTON, vol. 10, no. 1, 1 September 1984 (1984-09-01), pages 107-111, XP002069020

## Description

This invention relates to a radio frequency (RF) receiver circuit and more especially, although not exclusively, to a remotely accessible and tuneable radio receiver circuit for use as a radio relay.

US 5307195 discloses an apparatus for retrieving a microwave signal received by an antenna at a remote location and comprises a respective optical assembly located at the antenna and at a location remote thereto. The two optical assemblies are optically connected to each other by an optical fibre. The optical assembly at the remote location is operable to transmit an optical signal to the second assembly and to receive a modulated optical from the second assembly and convert it to an electrical signal. At the antenna the optical assembly comprises an optical loop which includes an electro-optic optical modulator within its path and is such that the optical signal received from the first assembly is looped back to the first assembly via the optical fibre. The electro-optic optical modulator, which comprises for example a Mach Zehnder type modulator, is connected to the antenna such that the received optical signal is modulated as it passes around the loop in response to the microwave signal received by the antenna. Detection of the modulated optical signal at the remote location allows retrieval of the microwave signal.

According to the present invention a radio frequency receiver circuit comprises: an antenna for receiving a radio frequency signal and is characterised by an optical detector for receiving a modulated optical signal and converting it to an electrical signal; means for mixing the electrical and radio frequency signals to produce an intermediate frequency signal; and a reflective optical modulator which is operable at the intermediate frequency to modify and reflect the optical signal with the intermediate frequency signal.

By detecting the optical signal which has been modified and reflected by the circuit, it is possible to remotely detect the radio frequency (RF) signal received by the circuit and the circuit thus acts as a remotely accessible RF receiver. Furthermore, since the modulation frequency of the illuminating optical signal determines the local oscillator frequency of the circuit, the circuit further operates as a remotely tuneable RF receiver. The term radio frequency is intended to have a broad meaning to include any electromagnetic radiation which is propagating in free space and is intended to include such radiation in at least the frequency range 10 kHz to 300GHz. A particular advantage of the receiver circuit of the present invention is that due to its simplicity it is inexpensive and yet provides a high performance capability. Depending on the performance required the circuit can either include its own power source such as a battery or it can rely on the optical signal to provide the electrical energy required to operate it. Since the local oscillator frequency of the circuit is set by the modulation frequency of the optical signal, the circuit does not need to generate its own stable reference frequency and this reduces the circuit's complexity and electrical power consumption.

Preferably the means for mixing the modulated electrical and RF signals comprises a non-linear radio frequency component such as a transistor and the optical receiver comprises a photodiode. In a particularly preferred form the photodiode is used as both the non-linear component and the optical receiver and the circuit is illuminated with a high intensity optical signal such that the photodiode operates as a non-linear device.

In one arrangement the circuit further comprises means, such as, for example, an optical beam splitter, for directing a part of the optical signal onto the optical detector and a part onto the reflective optical modulator. Advantageously in an alternative arrangement the optical receiver is located on the reflective surface of the optical modulator such that the optical signal is simultaneously incident on the reflective optical modulator and optical detector thereby eliminating the need for an optical beam splitter.

In yet a further implementation of the invention the circuit further comprises means such that the circuit transmits a radio frequency signal from the antenna and wherein the frequency of said transmitted signal is related to the modulation frequency of the optical signal used to illuminate the circuit. In a preferred embodiment the circuit is capable of simultaneously transmitting and receiving a receiver radio frequency signal. Such a circuit is ideally suited as an interrogator circuit for use in a tagging system which uses tags containing semi-passive (sometimes termed pseudo passive) transponder circuits since it is capable of illuminating a semi-passive tag with an RF signal and is capable of simultaneously detecting any modulation applied to this signal by the tag. A particular advantage of such an interrogator circuit is that communication over large distances is possible using only low power radio transmitters as the circuit is optically remotely accessible.

In a further preferred arrangement a photodiode is connected to the antenna such that the resonant frequency of the antenna can be remotely tuned using the optical signal to set the capacitance of the photodiode. Such an arrangement is particularly advantageous when the circuit is being operated as a transmitter circuit. It is envisaged either to provide a separate photodiode for this purpose or to use a single photodiode to both tune the antenna and detect the modulation of the optical signal. In the case of the former it is preferred to illuminate the circuit with two optical signals (i) a continuous wave optical signal for tuning the antenna and (ii) a modulated optical signal of a different wavelength to set the local oscillator frequency of the circuit. The concept of using an optical signal both to tune an antenna and to provide the local oscillator frequency for receiving and/or transmitting an RF signal in a radio frequency circuit is considered inventive in its own right.

In yet a further application of the invention, a radio receiver array comprises a plurality of radio frequency circuits as described above.

With any embodiment of the invention, the optical signal can propagate through free space and thus the circuit operates as an essentially 'line of sight' device or can be guided using an optical fibre or other light guide. In the latter case and in accordance with a further application of the invention, a distributed antenna system comprises one or more optical fibres including a plurality of radio frequency receiver circuits described above, associated with the optical fibre/s. Such an arrangement finds particular application as part of a telecommunications system within a building as it enables cordless communication using low power radio devices.

According to a second aspect of the invention a radio frequency circuit comprises an antenna and is characterised in that a photodiode connected across the antenna wherein the photodiode is operable to receive a modulated optical signal to provide the local oscillator frequency of the circuit and wherein the capacitance of the photodiode is used to tune the antenna.

In order that the invention may be better understood, five circuits in accordance with of the invention will now be described, by way of example only, with reference to the accompanying drawings in which:
Figure 1a is a schematic representation of a radio frequency receiver (relay) circuit in accordance with the invention;
Figure 1b is a schematic circuit diagram of the relay circuit of Figure 1a;
Figure 2 is a schematic of a further remotely accessible radio frequency relay circuit in accordance with the invention;
Figure 3 is a schematic representation of a remotely accessible radio frequency relay circuit according to a further aspect of the invention in which the antenna can be remotely tuned;
Figure 4 is a schematic representation of a remotely accessible radio frequency relay circuit with a further form of remote antenna tuning; and
Figure 5 is a schematic representation of a circuit for use in a tagging system in accordance with the invention.

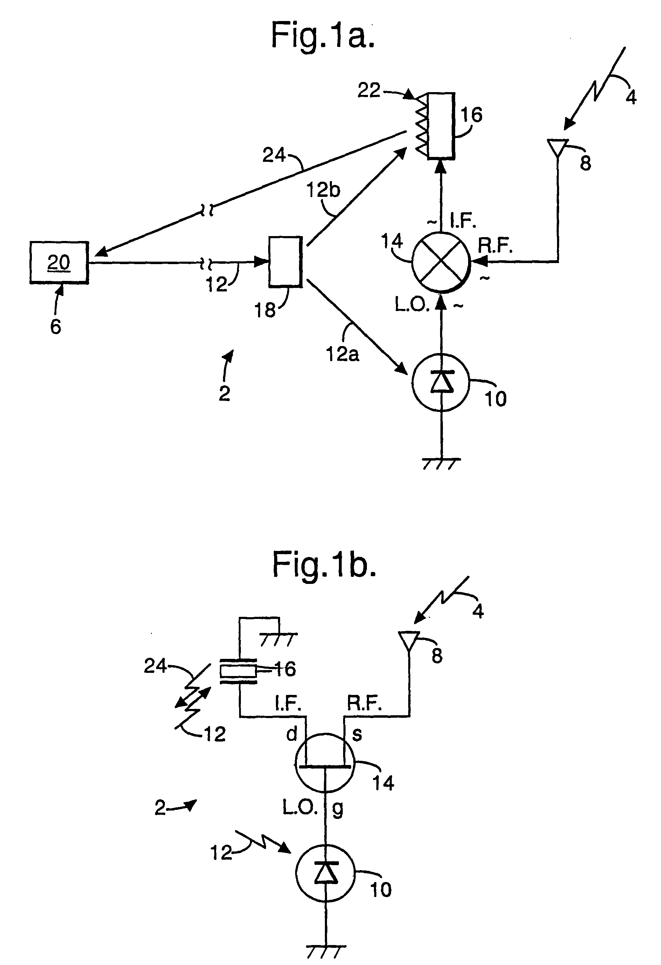

Referring to Figure 1a there is shown a radio relay circuit 2 which is capable of receiving and detecting a modulated radio frequency (RF) signal 4 in the frequency range 400 to 500 MHz and relaying the detected signal to a point 6 which is remote from the circuit 2. The relay circuit 2 comprises: an antenna 8 for receiving the modulated RF signal 4; a photodiode 10 which is capable of operating at radio frequencies for receiving and detecting a modulated optical signal 12; a non-linear mixer 14 for mixing the detected RF and optical signals; a piezoelectric resonator 16 and an optical beam splitter 18 for splitting the optical signal 12 to ensure that a respective part 12a, 12b of the signal is incident on the photodiode 10 and the resonator 16.

As shown in Figure 1b the non-linear RF component 14 can comprise a gallium arsenide (GaAs) field effect transistor (FET) which is configured by a matching circuit (not shown), which can comprise lengths of transmission line or discrete lumped elements, to operate as an ultra low current mixer circuit for mixing the RF signal 4 received by the antenna 8 with the electrical signal produced by the photodiode 10 as a result of the modulated optical signal 12a.

In operation a laser vibrometer system 20 which is located at the remote point 6 illuminates the circuit 2 with a beam of infra red (IR) light (1500 nm) 12 which is amplitude modulated (AM) at a selected radio frequency. The modulation frequency is selected to be the required frequency of operation of the radio relay circuit 2 which, for the embodiment illustrated, is in the range 400 to 500 MHz.

The optical signal 12 is split by the optical beam splitter 18 such that a part 12a of this signal is incident on the photodiode 10 and a part 12b is incident on the surface of the piezoelectric resonator 16. Although the function of the piezoelectric resonator is described below, it is sufficient to state that it has a retro-reflective surface 22 which reflects light 24 back towards the laser vibrometer 20.

The light 12a which is incident on the photodiode 10 is converted into an electrical signal which is used (i) to provide electrical energy to the circuit 2 and (ii) to act as a local oscillator for the GaAs FET mixer 14 by injecting the modulation frequency of the optical signal 12 into the gate g of the FET 14. The radio frequency signal 4 which is received by the antenna 8 is mixed by the FET 14 to produce a low frequency product signal, or intermediate frequency (IF) signal, which is applied to the piezoelectric resonator 16. The IF signal which is representative of the frequency difference between the RF signal 4 and the local oscillator frequency causes the retro-reflective surface 22 of the piezoelectric resonator 16 to vibrate at this frequency. Vibration of the retro-reflective surface 22 modifies the phase and/or amplitude of the reflected optical signal 24 and this modification is detected by the laser vibrometer system 20.

It will be appreciated that the circuit 2 thus acts as a remotely accessible radio receiver, or relay, for detecting low power radio frequency signals and can be remotely tuned to a desired frequency of operation by the frequency of modulation of the illuminating optical signal 12. Since the optical signal 12 is used to provide energy to the circuit 2, the circuit does not need to include a battery and consequently has a very long operating life expectancy. Furthermore, due to the simplicity of the circuit, an extremely compact and inexpensive device can be produced which is preferably encapsulated in an IR transparent plastics material.

One example of an application for the radio relay circuit described would be for tracking goods or vehicles in an urban environment in which the goods or vehicle to be tracked carries a low power radio transmitter. Normally this would be very difficult as the buildings in such an environment prevent the low power radio signals reaching a central receiving station. However by mounting a series of the radio relay circuits described at roof height, or on the side of buildings, it is possible using a steerable laser device at the central station to remotely detect low power radio signals which are being radiated at ground level. Since the local oscillator frequency for each radio relay circuit is provided by the modulation frequency of the interrogating laser device, the radio signals from a number of radio relay circuits can be coherently compared to determine the range of the transmitter from each relay circuit and from this the position of the radio transmitter determined and tracked. Such an arrangement is particularly useful for tracking the movement of high value shipments, vehicles or stolen vehicles.

A particular advantage of the radio receiver of the present invention is its high performance coupled with its low power consumption and extremely low cost. Since the optical signal provides the local oscillator frequency to the receiver circuit this reduces the power consumption of the circuit, increases the circuit's flexibility and eliminates the need for the circuit to have its own stable reference oscillator.

A further example of an application of the radio relay circuit described is in the construction of a distributed antenna system, such as for example a phased array antenna in which a number of circuits are located in known relationship to one another and interrogated in an appropriate sequence by the laser vibrometer system.

It will be appreciated by those skilled in the art that the circuit will also work for an RF signal 4 which is not modulated (i.e. a continuous wave carrier signal) and the circuit thus operates as a remotely tuneable radio frequency detector. For an unmodulated RF signal 4 the IF signal will also be unmodulated and the reflective surface of the piezoelectric modulator will vibrate at this frequency, thereby modifying and reflecting the optical signal 12. Detection of the modified optical signal 24 is indicative of the presence and magnitude of the radio frequency signal 4.

In addition to functioning as a remotely accessible radio receiver, the circuit can be configured to further operate as a remotely accessible radio transmitter which is capable of radiating an RF signal with a selected frequency. In such an application the circuit 2 further includes a battery, or a capacitor which is charged from the photo-diode 10 and the FET 14 is configured to self-oscillate and radiate an RF signal from the antenna 8. The FET 14 is configured to self-oscillate using a biasing network (not shown) such that it operates in its relatively higher gain linear region of its gain characteristic. In operation the frequency of self-oscillation of the FET 14 is determined by the modulation frequency of the optical signal 12 which is used to "injection-lock" the frequency of self-oscillation. The circuit can thus act as a remotely tuneable radio transmitter in which the frequency of operation is determined by the modulation frequency of the optical signal 12.

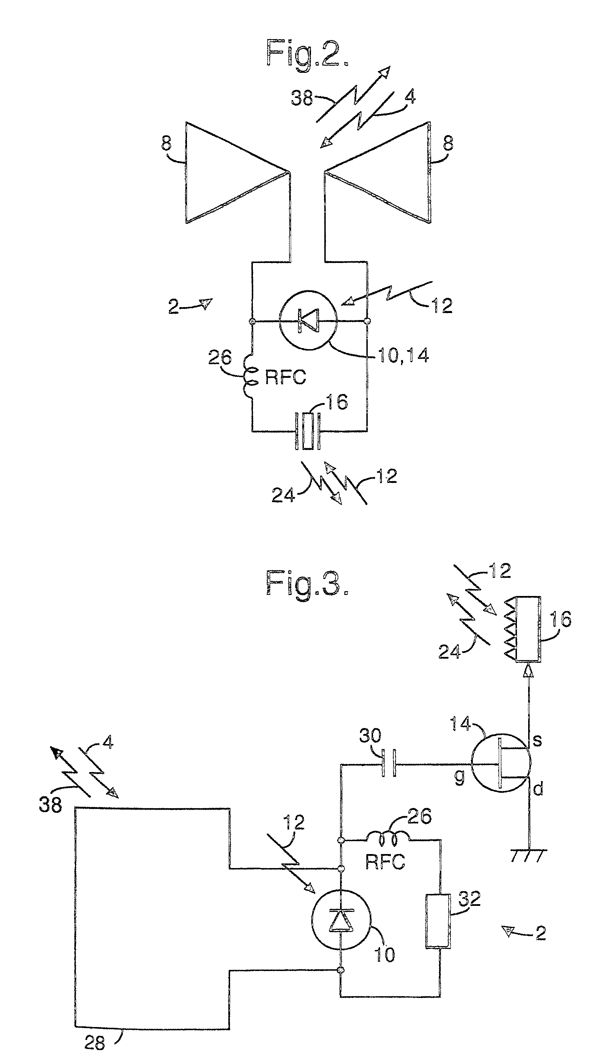

In a preferred embodiment of the invention, as shown in Figure 2, the photodiode 10 is configured to act not only as an optical detector for detecting the optical signal 12 but also to act as the non-linear mixing element 14, thereby eliminating the need for the transistor 14. In this arrangement the antenna comprises a bow-tie dipole broadband patch antenna (though it will be appreciated that other types of antenna can be used) and the photodiode 10 and resonator 16 are connected in parallel across the antenna 8. A radio frequency choke (RFC) 26 is provided between the photodiode 10 and resonator 16 to prevent the radio frequency signal reaching the resonator 16 thereby ensuring that only the IF signal reaches the resonator 16. When the photodiode 10 is illuminated by a sufficiently high intensity optical signal, its behaviour will become non-linear and it can then be used to mix the received RF signal 4 with the local oscillator frequency detected by the photodiode 10. Furthermore in such a circuit it is preferred to mount the photodiode 10 on the surface 22 of the piezoelectric resonator 16, thereby eliminating the need for the optical beam splitter 18, and this results in an even more compact device.

It will be appreciated by those skilled in the art that the circuit of Figure 2 inherently acts as a remotely tuneable RF transmitter. This is because the photodiode which detects the modulated optical signal 12 generates an RF voltage across the bow-tie dipole antenna 8 which is radiated as an RF signal 38. It is thus possible to operate the circuit as a remotely tuneable radio transmitter by illuminating it with an optical signal which is modulated with the required frequency of transmission of the circuit.

Referring to Figure 3, a further preferred form of the circuit is shown which utilises a loop antenna 28 (though it will be appreciated that the arrangement applies to other types of antenna). In common with the circuit of Figure 2 the photodiode 10 is connected across the open ends of the antenna 28 and performs two functions: (i) it detects the modulation of the optical signal 12 which is applied to the non-linear mixing element 14 via a coupling capacitor 30; and (ii) it acts as a tuning capacitor to set the resonant frequency of the loop antenna 28. The photodiode 10 which is illuminated with the AM optical signal 12 produces a photo current having two components: (a) a high frequency current corresponding to the RF modulation of the optical signal; and (b) a continuous or DC current, resulting from the continuous wave component. The DC current via the loop which comprises a radio frequency choke (RFC) 26 and load resistance 32 controls the DC bias across the photodiode 10 and hence its capacitance. The capacitance of the photodiode (10) is used to tune the antenna 28 to the desired frequency of operation which, for a transmitter circuit, allows efficient radiation of the radio frequency signal 38. The use of a photodiode to both tune an antenna and detect the local oscillator frequency for a radio frequency circuit is considered to be inventive in its own right.

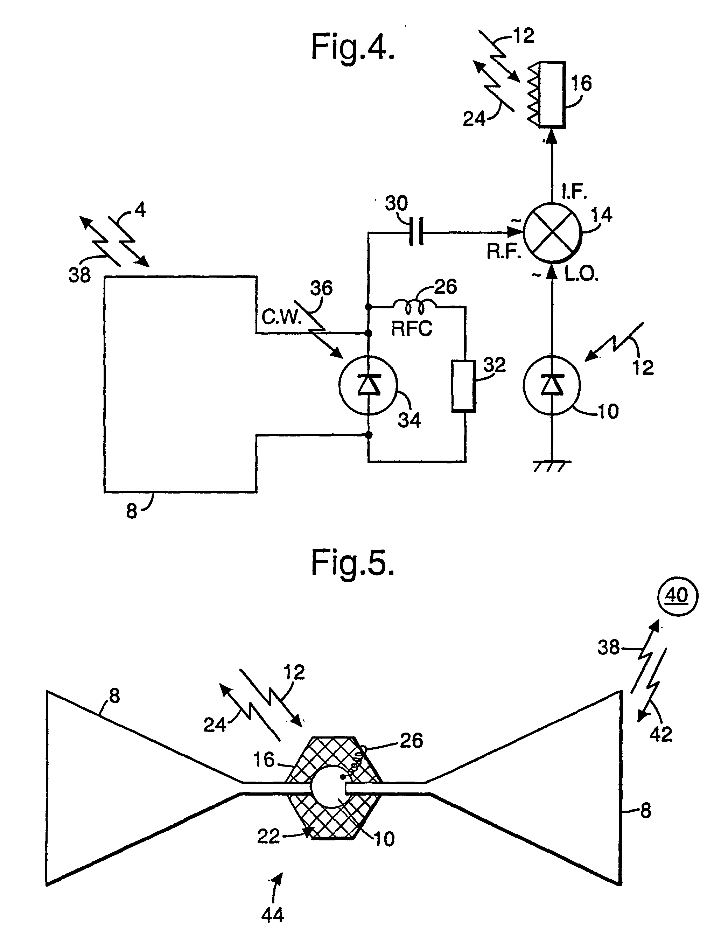

To further improve the bandwidth of the circuit, two photodiodes 10, 34 are provided, Figure 4. The first photodiode 10 is used to detect the local oscillator frequency and the second photodiode 34 to tune the antenna. In operation this circuit is illuminated with two optical signals, an AM modulated optical signal 12 and a continuous wave (CW) optical signal 36 which is of a different wavelength. As described above, the AM modulated signal 12 determines the local oscillator frequency of the circuit and is detected by the photodiode 10. It will be appreciated that the photodiode 10 can also be used as the non-linear mixing element if the AM modulated optical signal 12 is of sufficient intensity though it is preferred to use a dual gate GaAs FET as the radio frequency mixer. The photodiode 10 preferably includes an optical filter which blocks the CW optical signal 36. The CW optical signal 36 is detected by the second photodiode 34 and is used to control the bias across the antenna 28, thereby allowing the antenna to be tuned for optimum performance.

Referring to Figure 5, there is shown a circuit 44 in accordance with a further aspect of the invention which is for use in a tagging system which uses tags containing "semiactive", "pseudo passive" or "reflective modulating" transponder circuits. As is known a semi-passive transponder is a transceiver circuit which can detect information transmitted to it from an interrogator circuit and transmit information to the interrogator by reflecting and modulating the illuminating signal from the interrogator circuit. As such a semi-passive transponder does not include an active transmitter circuit and relies solely on the interrogator to provide the communication medium.

The circuit 44 of Figure 5 is in essence the same as that illustrated in Figure 2 and comprises a bow-tie dipole patch antenna 8, a radio frequency photodiode 10 connected across the dipole of the antenna and a piezoelectric resonator 16. As will be seen the photodiode 10 is mounted on the reflective surface 22 of the piezoelectric resonator 16 thereby eliminating the need for a beam splitter.

In this implementation the RFC 26 comprises the wire link between the resonator 16 and photodiode 10. The operation of the circuit 44 is substantially the same as that described above, in which the photodiode 10 acts as both the non-linear mixing element and the optical detector. The device 2 is illuminated with an optical signal 12 which is amplitude modulated at the required frequency of transmission of the circuit. The photodiode 10 detects this signal and generates a radio frequency voltage across the antenna 8 which radiates an RF signal 38. This RF signal 38 is received by a semi-passive tag, or transponder circuit 40, which reflectively modulates the RF signal back to the circuit 2. The reflected and modulated signal 42 is received by the interrogator circuit 44 and is mixed in the photodiode 10 with the transmitted frequency to produce an IF signal which corresponds with the modulation signal applied by the tag. The IF signal, which is applied to the piezoelectric crystal via the RFC 26, modifies the phase of the optical signal reflected from it and this modification is coherently de-modulated by the remote optical system 20. The circuit 44 thus acts as an interrogator circuit which is capable of transmitting an RF signal 38 and simultaneously receiving an RF signal 42. A particular advantage of this interrogator circuit 44 over the known arrangements which use radio frequency signals throughout, is that it can be operated at a long range using only low power RF signals.

Whilst in the various embodiments described so far the illuminating signal 12 propagates through free space such that the circuit is an essentially line of sight device it will be appreciated that, in other embodiments, the circuit can be illuminated by guiding the light using an optical fibre or other forms of light guide. One example of such an application is in a cordless telecommunications system for use in a building in which a number of interrogator circuits located at various points around the building are attached to an optical fibre network. A particular advantage of this type of system is that cordless communication is possible using very low power, short range, RF devices.

It will be appreciated that the present invention is not restricted to the specific circuits described and that modifications can be made to them which are within the scope of the invention. For example, whilst the use of a photodiode has been described, other forms of photo-detectors can be used, such as for example, photo-transistor. Furthermore, other forms of non-linear mixing components can be used.

Whilst in all of the embodiments described the circuit can, using the optical signal, remotely detect and receive radio frequency signals it will be appreciated that the circuit can additionally perform further functions such as, for example, using an optical signal to transmit or receive ultrasonic signals. In such an application the incident laser beam is modulated with an ultrasonic AM modulation and the mixer is used to drive the acoustic resonator. Alternatively, the circuit can be operated as an ultrasonic receiver circuit to RF transmit circuit. Here an incident ultrasonic signal generates a voltage from the piezoelectric element which is mixed with a laser-provided local oscillator causing an RF signal to be emitted. In yet a further implementation the radio circuit could be accessed using a magnetic signal as opposed to an optical signal.

## Claims

1. A radio frequency (RF) receiver circuit (2) comprises: an antenna (8, 28) for receiving a radio frequency (RF) signal (4) and is **characterised by** an optical detector (10) for receiving a modulated optical signal (12) and converting it to an electrical signal; means (14) for mixing the electrical and RF signals to produce an intermediate frequency signal; and a reflective optical modulator (16) which is operable at the intermediate frequency to modify and reflect (24) the optical signal (12) with the intermediate frequency.

2. A radio frequency receiver circuit according to Claim 1 and **characterised in that** the means (14) for mixing comprises a non-linear radio frequency component.

3. A radio frequency receiver circuit according to Claim 2 and **characterised in that** the non-linear component (14) comprises a transistor.

4. A radio frequency receiver circuit according to any preceding claim and **characterised in that** the optical receiver (10) comprises a photodiode.

5. A radio frequency receiver circuit according to Claim 4 when dependent on Claim 1 or Claim 2 and **characterised in that** the non-linear radio frequency component (14) comprises the photodiode (10).

6. A radio frequency receiver circuit according to any preceding claim and **characterised in that** the reflective optical modulator (16) comprises a piezoelectric acoustic resonator.

7. A radio frequency receiver circuit according to any preceding claim and further **characterised by** comprising means (18) for directing a part (12a) of the optical signal (12) onto the optical detector (10) and a part (12b) onto the reflective optical modulator (16).

8. A radio frequency receiver circuit according to any preceding claim and **characterised by** the optical detector (10) being located on the reflective surface (22) of the reflective optical modulator (16) such that the optical signal (12) is simultaneously incident on both the reflective optical modulator (16) and optical detector (10).

9. A radio frequency receiver circuit according to any preceding claim and further **characterised in that** the circuit (2) is operable to transmit a radio frequency signal (38) from the antenna (8, 28) and wherein the frequency of said transmitted signal (38) is related to the modulation frequency of the optical signal (12).

10. A radio frequency receiver circuit according to Claim 9 and **characterised in that** it is capable of simultaneously transmitting (38) and receiving (42) a radio frequency signal.

11. A radio frequency receiver circuit according to any preceding claim and further **characterised by** a photodiode (34) connected to the antenna (8, 28) such that the resonant frequency of the antenna (8, 28) can be remotely tuned by using the optical signal (12, 36) to set the capacitance of the photodiode (10, 34).

12. A radio frequency receiver circuit according to Claim 11 in which the photodiode (34) comprises the optical detector (10).

13. An interrogator circuit (44) for use in a tagging system which uses semi-passive transponders (40) and **characterised by** incorporating a radio frequency receiver circuit (2) according to Claim 10.

14. A radio receiver array **characterised by** comprising a plurality of radio frequency receiver circuits according to any preceding claim.

15. A distributed antenna system **characterised by** comprising an optical fibre including a plurality of radio frequency receiver circuits (2), according to any preceding claim, associated with the optical fibre.

16. A radio frequency circuit (2) comprising: an antenna (8, 28) and is **characterised in that** a photodiode (10) is connected across the antenna (8, 28) wherein the photodiode (10) is operable to receive a modulated optical signal (12) to provide the local oscillator frequency of the circuit (2) and wherein the capacitance of the photodiode (10) is used to tune the antenna (8, 28).

## Revendications

1. Circuit récepteur (2) de fréquence radio (FR) comprenant : une antenne (8, 28) pour recevoir un signal (4) de fréquence radio (FR) et **caractérisée par** un détecteur optique (10) pour recevoir un signal optique modulé (12) et le convertir en un signal électrique ; un dispositif (14) pour mélanger les signaux électrique et FR afin de produire un signal de fréquence intermédiaire ; ct un modulateur optique réfléchissant (16) utilisé à la fréquence intermédiaire pour modifier et réfléchir (24) le signal optique (12) à l'aide de la fréquence intermédiaire.

2. Circuit récepteur de fréquence radio selon la revendication 1 et **caractérisé en ce que** le dispositif (14) mélangeur comprend un composant de fréquence radio non linéaire.

3. Circuit récepteur de fréquence radio selon la revendication 2 et **caractérisé en ce que** le composant non linéaire (14) comprend un transistor.

4. Circuit récepteur de fréquencc radio selon l'une quelconque des revendications précédentes et **caractérisé en ce que** le récepteur optique (10) comprend une photodiode.

5. Circuit récepteur de fréquence radio selon la revendication 4 dépendamment de la revendication 1 ou de la revendication 2 et **caractérisé en ce que** le composant de fréquence radio non linéaire (14) comprend une photodiode (10).

6. Circuit récepteur de fréquence radio selon l'une quelconque des revendications précédentes et **caractérisé en ce que** le modulateur optique réfléchissant (16) comprend un résonateur acoustique piézoélectrique.

7. Circuit récepteur de fréquence radio selon l'une quelconque des revendications précédentes et **caractérisé en outre par** un dispositif (18) pour diriger une partie (12a) du signal optique (12) vers le détecteur optique (10) et une partie (12b) vers le modulateur optique réfléchissant (16).

8. Circuit récepteur de fréquence radio selon l'une quelconque des revendications précédentes et **caractérisé par** l'emplacement du détecteur optique (10) sur la surface réfléchissante (22) du modulateur optique réfléchissant (16) de manière à ce que le signal optique (12) soit incident simultanément sur le modulateur optique réfléchissant (16) et le détecteur optique (10).

9. Circuit récepteur de fréquence radio selon l'une quelconque des revendications précédentes et **caractérisé en outre en ce que** le circuit (2) permet de transmettre un signal de fréquence radio (38) à partir de l'antenne (8, 28) et dans lequel la fréquence dudit signal transmis (38) est liée à la fréquence de modulation du signal optique (12).

10. Circuit récepteur de fréquence radio selon la revendication 9 et **caractérisé en ce que** la transmission (38) et la réception (42) d'un signal de fréquence radio est possible simultanément.

11. Circuit récepteur de fréquence radio selon l'une quelconque des revendications précédentes et **caractérisé en outre par** une photodiode (34) connectée à l'antenne (8, 28) de sorte que la fréquence de résonance de l'antenne (8, 28) puisse être réglée à distance à l'aide du signal optique (12, 36) afin de définir la capacité de la photodiode (10, 34).

12. Circuit récepteur de fréquence radio selon la revendication 11 dans lequel la photodiode (34) comprend le détecteur optique (10).

13. Circuit interrogateur (44) pour un système de marquage utilisant des transpondeurs semi-passifs (40) et **caractérisé par** l'intégration d'un circuit récepteur de fréquence radio (2) selon la revendication 10.

14. Ensemble de récepteurs radio **caractérisé en ce qu'**il comprend une pluralité de circuits récepteurs de fréquence radio selon l'une quelconque des revendications précédentes.

15. Système d'antenne distribué **caractérisé en ce qu'**il comprend une fibre optique incluant une pluralité de circuits récepteur de fréquence radio (2), selon l'une quelconque des revendications précédentes, associés à la fibre optique.

16. Circuit de fréquence radio (2) comprenant une antenne (8, 28) et **caractérisé en ce qu'**une photodiode (10) est connectée à travers l'antenne (8, 28) et dans lequel la photodiode (10) est utilisée pour recevoir un signal optique modulé (12) afin de fournir la fréquence de l'oscillateur local du circuit (2) et dans lequel la capacité de la photodiode (10) est utilisée pour régler l'antenne (8, 28).

## Patentansprüche

1. Hochfrequenz- (RF-: radio frequency) Empfängerschaltung (2), umfassend eine Antenne (8,28) zum Empfangen eines Hochfrequenz- (RF-: radio frequency) Signals (4) und **gekennzeichnet durch** einen optischen Detektor (10) zum Empfangen eines modulierten, optischen Signals (12) und zu dessen Umwandlung in ein elektrisches Signal, Mittel (14) zum Mischen des elektrischen und des RF-Signals zum Erzeugen eines Zwischenfrequenz-Signals und einen reflektierenden, optischen Modulator (16), der bei der Zwischenfrequenz betreibbar ist, um das optische Signal (12) mit der Zwischenfrequenz zu modifizieren und zu reflektieren (24).

2. Hochfrequenz-Empfängerschaltung nach Anspruch 1 und **dadurch gekennzeichnet, dass** die Mischungsmittel (14) ein nichtlineares Hochfrequenz-Bauteil umfassen.

3. Hochfrequenz-Empfängerschaltung nach Anspruch 2 und **dadurch gekennzeichnet, dass** das nichtlineare Bauteil (14) ein Transistor ist.

4. Hochfrequenz-Empfängerschaltung nach einem der vorangehenden Ansprüche und **dadurch gekennzeichnet, dass** der optische Empfänger (10) eine Photodiode umfasst.

5. Hochfrequenz-Empfängerschaltung gemäß Anspruch 4, soweit von Anspruch 1 oder 2 abhängig und **dadurch gekennzeichnet, dass** das nichtlineare Hochfrequenz-Bauteil (14) eine Photodiode (10) umfasst.

6. Hochfrequenz-Empfängerschaltung nach einem der vorangehenden Ansprüche und **dadurch gekennzeichnet, dass** der reflektierende, optische Modulator (16) einen piezoelektrischen, akustischen Resonator umfasst.

7. Hochfrequenz-Empfängerschaltung nach einem der vorangehenden Ansprüche und weiter **dadurch gekennzeichnet, dass** Mittel (18) zum Leiten eines Teils (12a) des optischen Signals (12) auf den optischen Detektor (10) und eines Teils (12b) auf den reflektierenden, optischen Modulator (16) umfasst sind.

8. Hochfrequenz-Empfängerschaltung nach einem der vorangehenden Ansprüche und **dadurch gekennzeichnet, dass** der optische Detektor (10) auf der reflektierenden Oberfläche (22) des reflektierenden, optischen Modulators (16) derart angeordnet ist, dass das optische Signal (12) gleichzeitig auf den reflektierenden, optischen Modulator (16) und den optischen Detektor (10) fällt.

9. Hochfrequenz-Empfängerschaltung nach einem der vorangehenden Ansprüche und weiter **dadurch gekennzeichnet, dass** die Schaltung (2) betreibbar ist, um ein Hochfrequenz-Signal (38) von einer Antenne (8,28) aus zu senden und wobei die Frequenz des gesendeten Signals (38) mit der Modulationsfrequenz des optischen Signals (12) in Beziehung steht.

10. Hochfrequenz-Empfängerschaltung nach Anspruch 9 und **dadurch gekennzeichnet, dass** sie zum gleichzeitigen Senden (38) und Empfangen (42) eines Hochfrequenz-Signals in der Lage ist.

11. Hochfrequenz-Empfängerschaltung nach einem der vorangehenden Ansprüche und weiter **gekennzeichnet durch** eine Photodiode (34), die mit der Antenne (8,28) derart verbunden ist, dass die Resonanzfrequenz der Antenne (8,28) ferngesteuert abgestimmt werden kann **durch** Verwendung des optischen Signals (12,36) zur Einstellung der Kapazität der Photodiode.

12. Hochfrequenz-Empfängerschaltung nach Anspruch 11, wobei die Photodiode (34) einen optischen Detektor (10) umfasst.

13. Abfragevorrichtungsschaltung (44) zur Verwendung in einem Markierungssystem, das semi-passive Transponder (40) benutzt, **dadurch gekennzeichnet, dass** eine Hochfrequenz-Empfängerschaltung (2) nach Anspruch 10 beinhaltet ist.

14. Hochfrequenzempfänger-Feld, **dadurch gekennzeichnet, dass** eine Mehrzahl von Hochfrequenz-Empfängerschaltungen nach einem der vorangehenden Ansprüche umfasst sind.

15. Verteiltes Antennensystem, **dadurch gekennzeichnet, dass** eine optische Faser umfasst ist, wobei eine Mehrzahl von Hochfrequenz-Empfängerschaltungen (2) nach einem der vorangehenden Ansprüche der optischen Faser zugeordnet sind.

16. Hochfrequenz-Schaltung (2) umfassend eine Antenne (8,28) und **dadurch gekennzeichnet, dass** eine Photodiode (10) quer zur Antenne (8,28) angeschlossen ist, wobei die Photodiode (10) betreibbar ist, um ein moduliertes, optisches Signal (12) zu Signal (12) zu empfangen, um die Frequenz des lokalen Oszillators der Schaltung (2) zu liefern und wobei die Kapazität der Photodiode (10) benutzt wird, um die Antenne abzustimmen.
